# EUROPEAN PATENT APPLICATION

(11) **EP 4 718 401 A1**
(43) Date of publication of application: **01.04.2026**
(21) Application number: 24929400.0
(22) Date of filing: 11.12.2024
(51) Int. Cl.: G06V 40/12

(54) **FINGERPRINT RECOGNITION METHOD, FINGERPRINT RECOGNITION APPARATUS, ELECTRONIC DEVICE AND STORAGE MEDIUM**

(30) Priority: 18.06.2024 CN 202410784078
(71) Applicant: SHENZHEN GOODIX TECHNOLOGY CO., LTD., Shenzhen, Guangdong 518045 (CN)
(72) Inventor: ZOU, Ruijie, Shenzhen, Guangdong 518045 (CN); LI, Mingcai, Shenzhen, Guangdong 518045 (CN); WANG, Bo, Shenzhen, Guangdong 518045 (CN)
(74) Representative: Kraus & Lederer PartGmbB
(86) International application number: PCT/CN2024/138584
(87) International publication number: WO 2025/260645

(57) **Abstract**

Embodiments of the present disclosure provide a method and apparatus for recognizing fingerprint, an electronic device and a storage medium. The method for recognizing a fingerprint includes: acquiring an ambient temperature of an ultrasonic fingerprint module; searching for fingerprint acquisition parameters corresponding to the ambient temperature from multiple parameter configuration tables, wherein the fingerprint acquisition parameters corresponding to the ambient temperature differ in the multiple parameter configuration tables, and the fingerprint acquisition parameters constitute at least part of parameters required to perform fingerprint acquisition by the ultrasonic fingerprint module; and controlling the ultrasonic fingerprint module to perform fingerprint acquisition based on the fingerprint acquisition parameters, so as to perform fingerprint recognition using collected fingerprint images. The method for recognizing a fingerprint provided by embodiments of the present disclosure may be applied to fingerprint recognition in a variety of application scenarios, thereby improving a success rate of fingerprint recognition.

## Description

### TECHNICAL FIELD

Embodiments of the present disclosure relate to the technical field of data processing, and in particular to a method and apparatus for recognizing a fingerprint, an electronic device and a storage medium.

### BACKGROUND

There are mainly two types of publicly available under-screen fingerprint recognition solutions: the first is an optical fingerprint solution, and the second is an ultrasonic fingerprint solution. Here, the performance of optical fingerprint modules is significantly affected by the optical transmittance of screens. With the increasing complexity of internal writing in display screens and the development of flexible screen solutions, the optical transmittance of screens has decreased, which makes the optical fingerprint solution unable to meet application requirements. On the other hand, the ultrasonic fingerprint solution does not depend on the optical transmittance of screens and is a better alternative solution. The ultrasonic fingerprint recognition solution uses an ultrasonic fingerprint module to emit and receive a reflected ultrasonic signal to acquire a finger's fingerprint image. Due to differences in acoustic impedance between the screen, finger and air, the ultrasonic fingerprint module may distinguish between valleys and ridges on the fingerprint based on the reflected ultrasonic signal, thereby acquiring fingerprint features for fingerprint recognition.

However, in the prior art, fingerprint recognition modules collect fingerprint images using fixed parameters, resulting in poor quality of the collected fingerprint images and low success rate of fingerprint recognition.

### SUMMARY

In view of this, embodiments of the present disclosure provide a method and apparatus for recognizing a fingerprint, an electronic device and a storage medium to at least partially solve the above problems.

According to a first aspect of embodiments of the present disclosure, a method for recognizing a fingerprint is provided, including: acquiring an ambient temperature of an ultrasonic fingerprint module; searching for fingerprint acquisition parameters corresponding to the ambient temperature from multiple parameter configuration tables, where the fingerprint acquisition parameters corresponding to the ambient temperature differ in the multiple parameter configuration tables, and the fingerprint acquisition parameters constitute at least part of parameters required to perform fingerprint acquisition by the ultrasonic fingerprint module; and controlling the ultrasonic fingerprint module to perform fingerprint acquisition based on the fingerprint acquisition parameters, so as to perform fingerprint recognition using collected fingerprint images.

According to a second aspect of embodiments of the present disclosure, an apparatus for recognizing a fingerprint is provided, including: an acquisition unit, configured to acquire an ambient temperature of an ultrasonic fingerprint module; a search unit, configured to search for fingerprint acquisition parameters corresponding to the ambient temperature from multiple parameter configuration tables, where the fingerprint acquisition parameters corresponding to the ambient temperature differ in the multiple parameter configuration tables, and the fingerprint acquisition parameters constitute at least part of parameters required to perform fingerprint acquisition by the ultrasonic fingerprint module; and a controlling unit, configured to control the ultrasonic fingerprint module to perform fingerprint acquisition based on the fingerprint acquisition parameters, so as to perform fingerprint recognition using collected fingerprint images.

According to a third aspect of embodiments of the present disclosure, an electronic device is provided, including: a processor, a memory, a communication interface and a communication bus, where the processor, the memory and the communication interface communicate with each other via the communication bus; the memory is configured to store at least one executable instruction, the executable instruction enables the processor to perform operations corresponding to the method described in the first aspect.

According to a fourth aspect of embodiments of the present disclosure, a computer storage medium is provided, storing a computer program thereon, the program, when executed by a processor, implements the method described in the first aspect.

According to the solution for recognizing a fingerprint provided by embodiments of the present disclosure, after collecting the ambient temperature of the ultrasonic fingerprint module, the fingerprint acquisition parameters corresponding to the ambient temperature may be searched from the parameter configuration tables, and the ultrasonic fingerprint module may be controlled to perform fingerprint acquisition based on the fingerprint acquisition parameters, then fingerprint recognition may be performed based on the collected fingerprint images. Since the fingerprint acquisition parameters corresponding to the same ambient temperature differ in the multiple parameter configuration tables, fingerprint acquisition may be performed using the multiple fingerprint acquisition parameters based on the ambient temperature and the usage states of the electronic device, and fingerprint recognition may be attempted based on the collected fingerprint images. Compared to existing technologies that use fixed fingerprint acquisition parameters for fingerprint acquisition, this solution offers more options for the fingerprint acquisition parameters, thereby improving a success rate of fingerprint recognition.

### BRIEF DESCRIPTION OF DRAWINGS

In order to more clearly illustrate the technical solution in embodiments of the present disclosure or the prior art, the accompanying drawings to be used in the description of the embodiments or the prior art will be briefly introduced below. Obviously, the accompanying drawings in the following description are only some of the embodiments recorded in the embodiments of the present disclosure, and those of ordinary skill in the art may also obtain other accompanying drawings based on these accompanying drawings.
FIG. 1 is a flowchart of a method for recognizing a fingerprint provided in an embodiment of the present disclosure;
FIG. 2 is a flowchart of another method for recognizing a fingerprint provided in an embodiment of the present disclosure;
FIG. 3 is a schematic diagram showing influence of usage states of an electronic device on fingerprint recognition provided in an embodiment of the present disclosure;
FIG. 4 is a schematic diagram showing influence of usage states of another electronic device on fingerprint recognition provided in an embodiment of the present disclosure;
FIG. 5 is a schematic diagram showing a corresponding relationship between spatial frequency and ultrasonic emission frequency provided in an embodiment of the present disclosure;
FIG. 6 is a flowchart of a method for generating a parameter configuration table provided in an embodiment of the present disclosure;
FIG. 7 is a flowchart of another method for generating a parameter configuration table provided in an embodiment of the present disclosure;
FIG. 8 is a schematic diagram of an apparatus for recognizing a fingerprint provided in an embodiment of the present disclosure; and
FIG. 9 is a structural schematic diagram of an electronic device provided in an embodiment of the present disclosure.

### DETAILED DESCRIPTION

In order to enable those in this art to better understand the technical solution in embodiments of the present disclosure, the technical solution in the embodiments of the present disclosure will be described clearly and completely in the following in conjunction with the accompanying drawings in the embodiments of the present disclosure. It is obvious that the described embodiments are only some of the embodiments in the embodiments of the present disclosure, but not all of the embodiments. Based on the embodiments of the present disclosure, all other embodiments obtained by those of ordinary skill in the art shall fall within the scope of protection of the embodiments of the present disclosure.

The terminology used in the present disclosure is used only for the purpose of describing particular embodiments and is not intended to limit the present disclosure. The singular forms of "a," "the," and "this" used in the present disclosure and the appended claims are also intended to include plural forms, unless the context clearly indicates otherwise. It should also be understood that the term "and/or" as used herein refers to and contains any or all possible combinations of one or more of the associated listed items.

It should be understood that while the terms "first", "second", "third", etc. may be used in the present disclosure to describe various types of information, such information should not be limited to these terms. These terms are only used to distinguish the same type of information from one another. For example, without departing from the scope of the present disclosure, first information may also be referred to as second information, and similarly, second information may be referred to as first information. Depending on the context, as used herein, the word "if" may be interpreted as "when...", "upon..." or "in response to determining".

As described above, the ultrasonic fingerprint recognition solution uses an ultrasonic fingerprint module to emit and receive a reflected ultrasonic signal to acquire a finger's fingerprint image. Due to differences in acoustic impedance between the screen, finger and air, the ultrasonic fingerprint module may distinguish between valleys and ridges on the fingerprint based on the reflected ultrasonic signal, thereby acquiring fingerprint features for fingerprint recognition. Currently, the ultrasonic fingerprint module performs fingerprint acquisition based on a preset ultrasonic emission frequency, an echo delay, and the number of integrations. However, when there are foreign objects on the screen-such as changes in screen layering (e.g., no film or films of different types), or when there are foreign objects or dirt on the screen surface, the acoustic impedance between the screen, finger and air changes. If the ultrasonic emission frequency, echo delay, and the number of integrations of the ultrasonic fingerprint module remain unchanged, the quality of the fingerprint images collected by the ultrasonic fingerprint module deteriorates, resulting in a low success rate of fingerprint recognition.

Embodiments of the present disclosure provide a solution for recognizing a fingerprint, after collecting the ambient temperature of the ultrasonic fingerprint module, the fingerprint acquisition parameters corresponding to the ambient temperature may be searched from the parameter configuration tables, and the ultrasonic fingerprint module may be controlled to perform fingerprint acquisition based on the fingerprint acquisition parameters, then fingerprint recognition may be performed based on the collected fingerprint images. Since the fingerprint acquisition parameters corresponding to the same ambient temperature differ in the multiple parameter configuration tables, fingerprint acquisition may be performed using the multiple fingerprint acquisition parameters based on the ambient temperature and the usage states of the electronic device, and fingerprint recognition may be attempted based on the collected fingerprint images. Compared to existing technologies that use fixed fingerprint acquisition parameters for fingerprint acquisition, this solution offers more options for the fingerprint acquisition parameters, thereby improving the success rate of fingerprint recognition.

The method for recognizing a fingerprint provided by the present disclosure is described below through the embodiments.

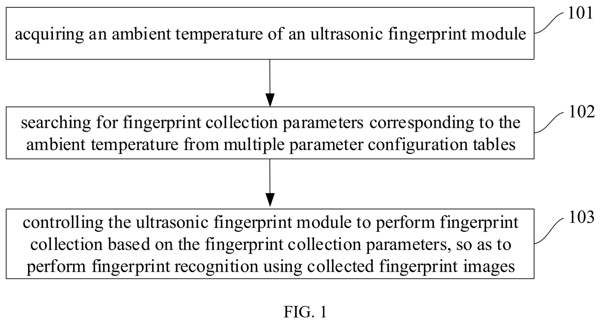

FIG. 1 is a flowchart of a method for recognizing a fingerprint provided in an embodiment of the present disclosure. As shown in FIG. 1, the method for recognizing a fingerprint includes steps 101-103 as follows:
Step 101: acquiring an ambient temperature of an ultrasonic fingerprint module.

The ambient temperature collected by a temperature sensor is acquired. The ambient temperature refers to the temperature of an external environment in which the ultrasonic fingerprint module operates, such as indoor temperature, or temperature of an electronic device. In one example, the ultrasonic fingerprint module may acquire the ambient temperature acquired by the temperature sensor installed within the electronic device. In another example, the temperature sensor may be provided on an ultrasonic sensor. The ultrasonic fingerprint module may acquire the ambient temperature through the temperature sensor, or the ultrasonic fingerprint module may acquire the ambient temperature measured by other sensors indoors, etc.

Step 102: searching for fingerprint acquisition parameters corresponding to the ambient temperature from multiple parameter configuration tables.

The fingerprint acquisition parameters corresponding to the ambient temperature differ in the multiple parameter configuration tables, and the fingerprint acquisition parameters constitute at least part of parameters required to perform fingerprint acquisition by the ultrasonic fingerprint module. For example, the fingerprint acquisition parameters may include an ultrasonic emission frequency, etc. It should be understood that since a transmission speed of ultrasonic signals is inversely proportional to temperature, i.e., the higher the temperature, the slower the transmission speed of ultrasonic signals, when determining the fingerprint acquisition parameters corresponding to the current ambient temperature, the ultrasonic fingerprint module may take into account the influence of ambient temperature when performing fingerprint acquisition.

Step 103: controlling the ultrasonic fingerprint module to perform fingerprint acquisition based on the fingerprint acquisition parameters, so as to perform fingerprint recognition using collected fingerprint images.

The ultrasonic fingerprint module is controlled to perform fingerprint acquisition based on the fingerprint acquisition parameters, so as perform fingerprint recognition based on the collected fingerprint images, for example, based on the ultrasonic frequency in the fingerprint acquisition parameters, emitting an ultrasonic signal of the corresponding frequency, and performing integration calculations on a reflected ultrasonic signal based on the number of integrations in the fingerprint acquisition parameters, etc. In one example, a processing unit in the electronic device may control the ultrasonic fingerprint module to perform fingerprint acquisition based on the fingerprint acquisition parameters, and perform fingerprint recognition based on the collected fingerprint images. It should be noted that since the fingerprint acquisition parameters are queried in multiple parameter configuration tables, multiple fingerprint acquisition parameters corresponding to the same ambient temperature may be searched for in the multiple configuration tables, therefore, the ultrasonic fingerprint module may be controlled to perform fingerprint acquisition based on the multiple fingerprint acquisition parameters, to obtain multiple fingerprint images. For example, fingerprint acquisition may be performed sequentially based on the multiple fingerprint acquisition parameters, until fingerprint recognition is successfully performed based on the collected fingerprint images.

In this embodiment of the present disclosure, after collecting the ambient temperature of the ultrasonic fingerprint module, the fingerprint acquisition parameters corresponding to the ambient temperature may be searched from the parameter configuration tables, and the ultrasonic fingerprint module may be controlled to perform fingerprint acquisition based on the fingerprint acquisition parameters, then fingerprint recognition may be performed based on the collected fingerprint images. Since the fingerprint acquisition parameters corresponding to the same ambient temperature differ in the multiple parameter configuration tables, fingerprint acquisition may be performed using the multiple fingerprint acquisition parameters based on the ambient temperature and the usage states of the electronic device, and fingerprint recognition may be attempted based on the collected fingerprint images. Compared to existing technologies that use fixed fingerprint acquisition parameters for fingerprint acquisition, this solution offers more options for the fingerprint acquisition parameters, thereby improving the success rate of fingerprint recognition.

In a possible implementation, when searching for fingerprint acquisition parameters corresponding to the ambient temperature from multiple parameter configuration tables, the fingerprint acquisition parameters corresponding to the ambient temperature may be searched sequentially from the multiple parameter configuration tables according to a search order of the multiple parameter configuration tables, and fingerprint acquisition may be performed based on the fingerprint acquisition parameters, until the fingerprint is successfully recognized using the collected fingerprint images.

The search order may be preset. When performing a search, the parameter configuration tables may be searched sequentially according to the search order. For example, the search order may be Parameter Configuration Table 1, Parameter Configuration Table 2, and Parameter Configuration Table 3. When performing a search based on the ambient temperature, Parameter Configuration Table 1 is searched first, followed by Parameter Configuration Table 2, and then Parameter Configuration Table 3.

After finding the fingerprint acquisition parameters from the parameter configuration tables, the fingerprint module may be controlled to perform fingerprint acquisition based on the fingerprint acquisition parameters to obtain the fingerprint images. If fingerprint recognition fails based on the collected fingerprint images, fingerprint acquisition parameters corresponding to the ambient temperature may be searched in a next parameter configuration table according to the search order and fingerprint images may be recollected. If recognition succeeds, the search for fingerprint acquisition parameters may be stopped. For example, the search order is Parameter Configuration Table 1, Parameter Configuration Table 2, and Parameter Configuration Table 3. When fingerprint recognition is successful using the fingerprint images collected based on the fingerprint acquisition parameters corresponding to the ambient temperature in Parameter Configuration Table 1, stop searching for fingerprint acquisition parameters. When fingerprint recognition fails using the fingerprint images collected based on the fingerprint acquisition parameters corresponding to the ambient temperature in Parameter Configuration Table 1, searching for the corresponding fingerprint acquisition parameters in Parameter Configuration Table 2. When fingerprint recognition fails using the fingerprint images collected based on the fingerprint acquisition parameters corresponding to the ambient temperature in Parameter Configuration Table 2, searching for the corresponding fingerprint acquisition parameters in Parameter Configuration Table 3. The fingerprint acquisition parameters corresponding to the ambient temperature may be searched sequentially from the multiple parameter configuration tables according to the search order, until the ultrasonic fingerprint module is controlled to successfully recognize the fingerprint using the collected fingerprint images based on the fingerprint acquisition parameters.

When fingerprint recognition all fails using the fingerprint images collected by the ultrasonic fingerprint module based on the fingerprint acquisition parameters in each parameter configuration table, it indicates that the user is an unauthorized user or the fingerprint recognition environment is poor (e.g., dirt on the fingerprint module's pressing surface, the user's finger being dirty, or sweat stains). In this regard, the search for parameter configuration tables may be stopped, i.e., stopping fingerprint acquisition and fingerprint recognition, and returning to fingerprint recognition failure.

It should be understood that in another possible implementation, multiple parameter configuration tables may be searched based on the ambient temperature to obtain multiple fingerprint acquisition parameters corresponding to the ambient temperature from the multiple parameter configuration tables. Then, the fingerprint module may be controlled to perform fingerprint acquisition sequentially based on the multiple fingerprint acquisition parameters, and perform fingerprint recognition using the collected multiple fingerprint images until fingerprint recognition is successful.

In this embodiment of the present disclosure, the fingerprint acquisition parameters corresponding to the ambient temperature are searched sequentially from the multiple parameter configuration tables according to the search order, and fingerprint recognition is performed based on the collected fingerprint images, enabling the obtaining of the fingerprint acquisition parameters corresponding to the ambient temperature. Therefore, fingerprint images may be collected based on the fingerprint acquisition parameters corresponding to the ambient temperature, and fingerprint recognition may be performed based on the collected fingerprint images. Since the ultrasonic fingerprint module is controlled to stop searching for fingerprint acquisition parameters once fingerprint recognition is successfully performed using the collected fingerprint images based on the fingerprint acquisition parameters, a fingerprint acquisition process may be stopped in time when fingerprint recognition is successful, which may prevent the processing unit's computing power from being wasted by continuing searching for fingerprint acquisition parameters when fingerprint recognition is successful, reduce the time required for fingerprint recognition, and improve practicality of the method for recognizing a fingerprint.

In a possible implementation, if fingerprint acquisition is performed based on fingerprint acquisition parameters in a first to-be-searched parameter configuration table and the fingerprint is not successfully recognized using the collected fingerprint images, searching for the fingerprint acquisition parameters corresponding to the ambient temperature from the multiple parameter configuration tables respectively, and controlling the ultrasonic fingerprint module to perform fingerprint acquisition respectively based on each of the fingerprint acquisition parameters that is searched for, and determining a target fingerprint image having an optimal image quality from the collected fingerprint images, and performing fingerprint recognition based on the target fingerprint image.

When determining the fingerprint acquisition parameters, first searching for the fingerprint acquisition parameters corresponding to the ambient temperature in a first-ranked parameter configuration table based on the ambient temperature, and collecting fingerprint images based on these fingerprint acquisition parameters. When fingerprint recognition fails using the collected fingerprint images, searching for the fingerprint acquisition parameters corresponding to the ambient temperature in all parameter configuration tables based on the ambient temperature. For example, there are 3 parameter configuration tables in total, the first to-be-searched parameter configuration table is Parameter Configuration Table 1. If fingerprint recognition fails based on the fingerprint acquisition parameters in Parameter Configuration Table 1, searching for the fingerprint acquisition parameters corresponding to the ambient temperature in the 3 parameter configuration tables respectively.

The fingerprint module is controlled to collect fingerprint images based on the fingerprint acquisition parameters in all the parameter configuration tables, obtain multiple fingerprint images, determine the image quality of the multiple fingerprint images respectively, and use the fingerprint image having the optimal image quality as the target fingerprint image to perform fingerprint recognition.

In one example, based on texture features of the collected fingerprint images, quality scores corresponding to the fingerprint images may be determined, and a fingerprint image having the highest quality score may be determined as the target fingerprint image having the optimal image quality.

In this embodiment of the present disclosure, if fingerprint recognition fails using the collected fingerprint images based on the fingerprint acquisition parameters in the first to-be-searched parameter configuration table, the fingerprint acquisition parameters corresponding to the ambient temperature are searched from the multiple parameter configuration tables respectively. Therefore, multiple fingerprint images may be collected based on the multiple fingerprint acquisition parameters, and the target fingerprint image having the optimal image quality may be used as the fingerprint image for fingerprint recognition. Therefore, the optimal fingerprint acquisition parameters in the current application scenario may be determined. Compared to the solution in the foregoing embodiment, since only two fingerprint recognition processes (fingerprint recognition performed using the fingerprint images collected based on the fingerprint acquisition parameters in the first-ranked parameter configuration table, and fingerprint recognition performed based on the target fingerprint image) are required, the efficiency of fingerprint recognition performed using the fingerprint images collected in this solution is high.

In a possible implementation, after controlling the ultrasonic fingerprint module to perform fingerprint acquisition based on the fingerprint acquisition parameters and successfully recognizing the fingerprint using the collected fingerprint images, if a parameter configuration table containing the fingerprint acquisition parameters is not the first to-be-searched parameter configuration table, updating the search order of the multiple parameter configuration tables, so that the parameter configuration table containing the fingerprint acquisition parameters used to collect the fingerprint images is to be searched first in a next round of fingerprint recognition.

When fingerprint recognition is successful, if the parameter configuration table containing the fingerprint acquisition parameters used to collect the fingerprint images is the first to-be-searched parameter configuration table, the search order is not updated. For example, the search order is Parameter Configuration Table 1, Parameter Configuration Table 2, and Parameter Configuration Table 3. If fingerprint recognition is successful using the fingerprint images collected based on the fingerprint acquisition parameters corresponding to the ambient temperature in Parameter Configuration Table 1, then Parameter Configuration Table 1 is proven to be applicable to the current fingerprint recognition scenario, and the search order is not updated.

If the parameter configuration table containing the fingerprint acquisition parameters is not the first to-be-searched parameter configuration table, the search order is to be updated. In particular, the parameter configuration table containing the fingerprint acquisition parameters used to collect the fingerprint images that successfully performs fingerprint recognition is to be searched first in a next round of fingerprint recognition. For example, the search order is Parameter Configuration Table 1, Parameter Configuration Table 2, and Parameter Configuration Table 3. If fingerprint recognition fails using the fingerprint images collected based on the fingerprint acquisition parameters corresponding to the ambient temperature in Parameter Configuration Table 1, and fingerprint recognition is successful using the fingerprint images collected based on the fingerprint acquisition parameters corresponding to the ambient temperature in Parameter Configuration Table 2, then Parameter Configuration Table 2 is proven to be applicable to the current fingerprint recognition scenario, therefore, move Parameter Configuration Table 2 to an earlier position, and the updated search order is Parameter Configuration Table 2, Parameter Configuration Table 1, and Parameter Configuration Table 3. It should be understood that the above is merely an example. It is only necessary to prioritize the parameter configuration table containing the fingerprint acquisition parameters corresponding to the fingerprint images when recognition is successful to the first to-be-searched parameter configuration table, while the order of other parameter configuration tables is not specified. For example, the parameter configuration table containing the fingerprint acquisition parameters when recognition is successful may be moved to the first position, followed by the sequential relocation of other parameter configuration tables, or the parameter configuration table containing the fingerprint acquisition parameters when recognition is successful may be swapped with the parameter configuration table ranked first, and so on.

In the above embodiment, the fingerprint acquisition parameters corresponding to the ambient temperature are searched from the multiple parameter configuration tables respectively, and the ultrasonic fingerprint module is controlled to perform fingerprint acquisition respectively based on each of the fingerprint acquisition parameters that is searched for, the target fingerprint image having the optimal image quality is determined from the collected fingerprint images, and fingerprint recognition is performed based on the target fingerprint image. If fingerprint recognition is successful and the parameter configuration table containing the fingerprint acquisition parameters corresponding to the target fingerprint image is not the first to-be-searched parameter configuration table, this parameter configuration table is adjusted to be the first to be searched.

It should be understood that, when fingerprint recognition all fails using the fingerprint images collected based on the fingerprint acquisition parameters corresponding to the ambient temperature in all the parameter configuration tables, it indicates that the user is an unauthorized user or the fingerprint recognition environment is poor (e.g., dirt on the fingerprint module's pressing surface, the user's finger being dirty, or sweat stains). In this regard, the search order of the parameter configuration tables is not to be updated.

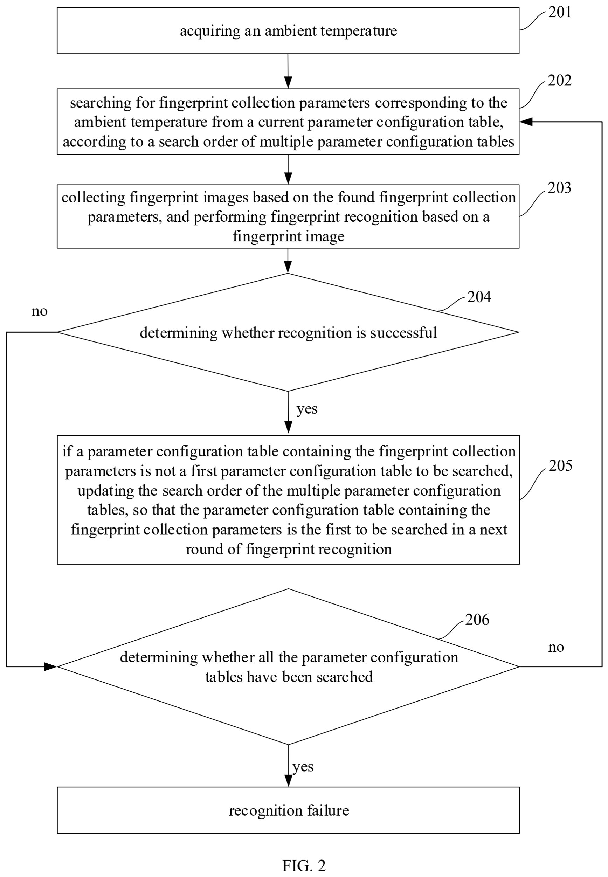

The following describes a specific embodiment. FIG. 2 is a flowchart of another method for recognizing a fingerprint provided in an embodiment of the present disclosure. As shown in FIG. 2, the method for recognizing a fingerprint includes steps 201-206 as follows:
Step 201: acquiring an ambient temperature.
Step 202: searching for fingerprint acquisition parameters corresponding to the ambient temperature from a current parameter configuration table, according to a search order of multiple parameter configuration tables.
Step 203: collecting fingerprint images based on the fingerprint acquisition parameters, and performing fingerprint recognition based on a fingerprint image.
Step 204: determining whether recognition is successful, if yes, performing step 205; otherwise, performing step 206.
Step 205: if a parameter configuration table containing the fingerprint acquisition parameters is not a first to-be-searched parameter configuration table, updating the search order of the multiple parameter configuration tables, so that the parameter configuration table containing the fingerprint acquisition parameters is the first to be searched in a next round of fingerprint recognition.
Step 206: determining whether all the parameter configuration tables have been searched, if yes, returning to recognition failure; otherwise, determining a next parameter configuration table of the current parameter configuration table as the current parameter configuration table according to the search order of the parameter configuration tables, and performing step 202.

In this embodiment of the present disclosure, after controlling the ultrasonic fingerprint module to perform fingerprint recognition successfully using the fingerprint image collected based on the fingerprint acquisition parameter, if the parameter configuration table containing the fingerprint acquisition parameters is not the first to-be-searched parameter configuration table, the search order of the multiple parameter configuration tables is updated, so that the parameter configuration table containing the fingerprint acquisition parameters is to be searched first in the next round of fingerprint acquisition for fingerprint recognition. By updating the search order, the parameter configuration table having high recognition success rate may be searched first, thereby reducing the number of times fingerprint acquisition parameters are searched for and the number of times fingerprint recognition is performed based on the fingerprint acquisition parameter, improving the success rate of fingerprint recognition, reducing the time spent on fingerprint recognition, and improving the efficiency of fingerprint recognition.

In a possible implementation, when searching for the fingerprint acquisition parameters corresponding to the ambient temperature from the multiple parameter configuration tables, a current parameter configuration table in the multiple parameter configuration tables may be searched based on the ambient temperature. When the current parameter configuration table includes the ambient temperature, the fingerprint acquisition parameters corresponding to the ambient temperature may be read from the current parameter configuration table. When the current parameter configuration table does not include the ambient temperature, a reference temperature that is closest to the ambient temperature and included in the current parameter configuration table may be determined, and fingerprint acquisition parameters corresponding to the reference temperature in the current parameter configuration table may be determined as the fingerprint acquisition parameters corresponding to the ambient temperature.

After acquiring the ambient temperature, the fingerprint acquisition parameters corresponding to the ambient temperature in the parameter configuration table may be searched for based on the ambient temperature. In this regard, the parameter configuration table may be searched based on the collected ambient temperature. The parameter configuration table includes a corresponding relationship between temperature and fingerprint acquisition parameters. When the parameter configuration table includes the acquired ambient temperature, the fingerprint acquisition parameters corresponding to the ambient temperature may be read from the current parameter configuration table. For example: the parameter configuration table includes fingerprint acquisition parameters corresponding to 20°C, 25°C, 30°C, etc. When the acquired ambient temperature is 25°C, the fingerprint acquisition parameters corresponding to 25°C are read from this parameter configuration table.

When the parameter configuration table does not include the acquired ambient temperature, a temperature that is closest to the ambient temperature in the current parameter configuration table may be determined as the reference temperature, and the fingerprint acquisition parameters corresponding to the reference temperature may be determined as the fingerprint acquisition parameters corresponding to the ambient temperature. For example: the parameter configuration table includes fingerprint acquisition parameters corresponding to 20°C, 25°C, 30°C, etc. When the acquired ambient temperature is 27°C, the temperature (25°C) closest to 27°C in the parameter configuration table is determined as the reference temperature, and the fingerprint acquisition parameters corresponding to 25°C in this parameter configuration table are read as the fingerprint acquisition parameters corresponding to the ambient temperature of 27°C.

It should be understood that when the parameter configuration table includes the fingerprint acquisition parameters corresponding to 20°C, 25°C, and 30°C, and the acquired ambient temperature is 22.5°C or 27.5°C, since the ambient temperature is an intermediate value and is close to both adjacent temperatures, in such cases, 20°C or 25°C may be used as the reference temperature of 22.5°C, and 25°C or 30°C may be used as the reference temperature of 27.5°C.

In this embodiment of the present disclosure, when the current parameter configuration table includes the ambient temperature, the fingerprint acquisition parameters corresponding to the ambient temperature are read. When the current parameter configuration table does not include the ambient temperature, the temperature closest to the ambient temperature is determined as the reference temperature, and the fingerprint acquisition parameters corresponding to the reference temperature are determined as the fingerprint acquisition parameters corresponding to the ambient temperature. Therefore, the corresponding fingerprint acquisition parameters may be determined based on the ambient temperature. Whether or not the acquired ambient temperature is included in the parameter configuration table, the fingerprint acquisition parameters corresponding to the ambient temperature may be confirmed, preventing the inability to determine the fingerprint acquisition parameters corresponding to the ambient temperature due to the absence of the ambient temperature in the parameter configuration table, therefore, this solution may be applicable to various ambient temperatures and is highly versatile.

In a possible implementation, the fingerprint acquisition parameters include at least one of: an ultrasonic emission frequency, an echo delay, and the number of integrations, where the echo delay is used to indicate a time difference between emission of an ultrasonic signal and reception of an ultrasonic echo signal reflected back by an external structure, and the number of integrations is used to indicate the number of integration operations performed on the ultrasonic echo signal or the number of ultrasonic emissions.

The fingerprint acquisition parameters may include the ultrasonic emission frequency. For example, the ultrasonic emission frequency may be 11 MHz, 12 MHz, etc. The processing unit may control the ultrasonic fingerprint module to emit an ultrasonic signal at the corresponding frequency according to the ultrasonic emission frequency specified in the fingerprint acquisition parameters.

The echo delay may indicate the delay in receiving an ultrasonic echo signal. For example, after emitting an ultrasonic signal, an ultrasonic echo signal is received with a 10ms delay. In this case, the received ultrasonic echo signal may be a superimposed ultrasonic echo signal reflected back by a finger. It should be understood that temperature affects the transmission speed of ultrasonic signals. Therefore, using the same echo delay at different temperatures may result in the inability to properly receive the superimposed ultrasonic echo signal reflected back by the finger, causing the received ultrasonic echo signal to be weak, and leading to poor image quality of a recognized fingerprint image.

The number of integrations may indicate the number of integration operations performed on the ultrasonic echo signal. The number of integrations affects a signal quantity obtained after performing integration operations on the ultrasonic echo signal. When the ultrasonic echo signal is weak, the number of integrations needs to be increased to obtain a larger signal quantity. In one example, the number of integrations may also indicate the number of times of ultrasonic emissions. When the number of integrations is n, ultrasonic waves are emitted n times, and integration operations are performed on the n reflected ultrasonic echo signals, and results of the n integration operations are then superimposed to increase the signal quantity, with the total number of integrations being n in this regard. Sampling one echo signal is completed within small time range, and the intensity value of one echo signal may be understood as an integral value obtained by integrating the echo signal received in a single instance within its collection time range. The number of integrations is used to control the above integration process repeated multiple times. In this embodiment of the present disclosure, the fingerprint acquisition parameters include at least one of ultrasonic emission frequency, echo delay, and the number of integrations. Thus, fingerprint acquisition may be performed using different ultrasonic emission frequencies, echo delays, or numbers of integrations based on the ambient temperature, making the fingerprint acquisition parameters suitable for the current application scenario, enabling the collection of high-quality fingerprint images and improving the success rate of fingerprint recognition.

In a possible implementation, the multiple parameter configuration tables correspond to different usage states of an electronic device where the ultrasonic fingerprint module is located, the ultrasonic fingerprint module is located below a display screen of the electronic device, and the usage states of the electronic device include at least: no film on the display screen, films of different materials and/or thicknesses on the display screen. The fingerprint acquisition parameters include at least one of: an ultrasonic emission frequency, an echo delay, and the number of integrations. When the ambient temperature is the same, the ultrasonic emission frequency of the electronic device in a usage state when there is no film on the display screen is greater than the ultrasonic emission frequency of the electronic device in a usage state when there is a film on the display screen. When the ambient temperature is the same, the echo delay and the number of integrations of the electronic device in the usage state when there is a film on the display screen are greater than the echo delay and the number of integrations of the electronic device in the usage state when there is no film on the display screen. When the ambient temperature is the same, the echo delay and the number of integrations of the electronic device in a usage state when the display screen is applied with a tempered glass film are greater than the echo delay and the number of integrations of the electronic device in a usage state when the display screen is applied with a non-tempered glass film.

The multiple parameter configuration tables may correspond to different usage states of the electronic device, and the usage states of the electronic device include: no film on the display screen, films of different materials and/or thicknesses on the display screen. For example, the display screen is applied with a factory-installed film, a soft film, or a tempered glass film, etc.

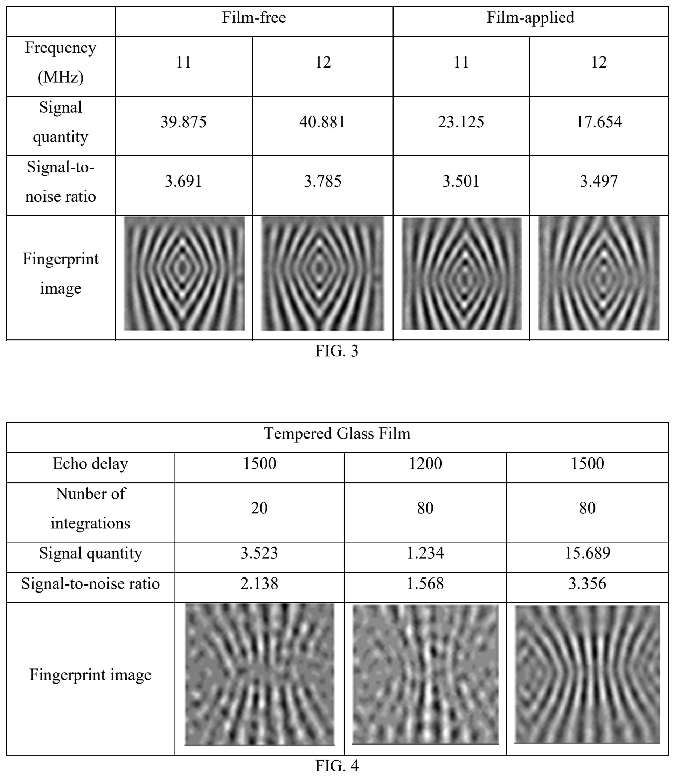

FIG. 3 is a schematic diagram showing influence of usage states of an electronic device on fingerprint recognition provided in an embodiment of the present disclosure. As shown in FIG. 3, in a scenario where the display screen is not film-applied, the signal quantity is relatively large, therefore, a relatively higher frequency may be selected to achieve a better signal-to-noise ratio. While in a scenario where the display screen is film-applied, the signal quantity is relatively small, therefore, a relatively lower frequency may be selected to achieve a better signal quantity. That is, the ultrasonic emission frequency of the electronic device in the usage state when there is no film on the display screen is greater than the ultrasonic emission frequency of the electronic device in the usage state when there is a film on the display screen. Therefore, fingerprint images having large signal quantity and high signal-to-noise ratio may be collected.

FIG. 4 is a schematic diagram showing influence of usage states of another electronic device on fingerprint recognition provided in an embodiment of the present disclosure. As shown in FIG. 4, in a scenario where the electronic device is in the usage state when the display screen is applied with a tempered glass film, since the tempered glass film is thick, echo time of the ultrasonic signal increases, requiring an increase in the echo delay. For example, in FIG. 4, under the condition of the same number of integrations, a large echo delay results in large signal quantity and high signal-to-noise ratio. Moreover, since the tempered glass film causes significant attenuation of the ultrasonic signal, it is necessary to increase the number of integrations. For example, in FIG. 4, increasing the number of integrations under the condition of the same echo delay may improve the signal quantity and the signal-to-noise ratio of fingerprint images. That is, the echo delay and the number of integrations of the electronic device in the usage state when the display screen is applied with a tempered glass film are greater than the echo delay and the number of integrations of the electronic device in the usage state when the display screen is applied with a non-tempered glass film. Therefore, fingerprint images having large signal quantity and high signal-to-noise ratio may be collected.

Similarly, when a film is applied to the display screen of the electronic device, compared to film-free, the thickness of the film is added to the display screen. Therefore, echo time of the ultrasonic signal increases, requiring an increase in the echo delay. Moreover, since the film applied to the display screen causes significant attenuation of the ultrasonic signal, it is necessary to increase the number of integrations. That is, the echo delay and the number of integrations of the electronic device in the usage state when there is a film on the display screen are greater than the echo delay and the number of integrations of the electronic device in the usage state when there is no film on the display screen. Therefore, fingerprint images having large signal quantity and high signal-to-noise ratio may be collected.

In this embodiment of the present disclosure, the multiple parameter configuration tables correspond to the different usage states of the electronic device where the ultrasonic fingerprint module is located. Therefore, fingerprint acquisition may be performed based on the multiple fingerprint acquisition parameters in the corresponding multiple parameter configuration tables in the different usage states of the electronic device. Compared to existing technologies that use fixed fingerprint acquisition parameters for fingerprint acquisition, this solution may use multiple fingerprint acquisition parameters for fingerprint acquisition when no film on the display screen, or when films of different materials and/or thicknesses on the display screen. Therefore, the electronic device can collect fingerprint images having large signal quantity and high signal-to-noise ratio, i.e., high-image quality fingerprint images, in the different usage states of the electronic device, thereby improving the success rate of fingerprint recognition.

In a possible implementation, the multiple parameter configuration tables correspond to different ranges of fingerprint spatial frequencies, where each of the fingerprint spatial frequencies is used to indicate a distance between adjacent stripes on the fingerprint. The fingerprint acquisition parameters include at least one of: an ultrasonic emission frequency, an echo delay, and the number of integrations. When the ambient temperature is the same, the higher each of the fingerprint spatial frequencies, the higher the ultrasonic emission frequency.

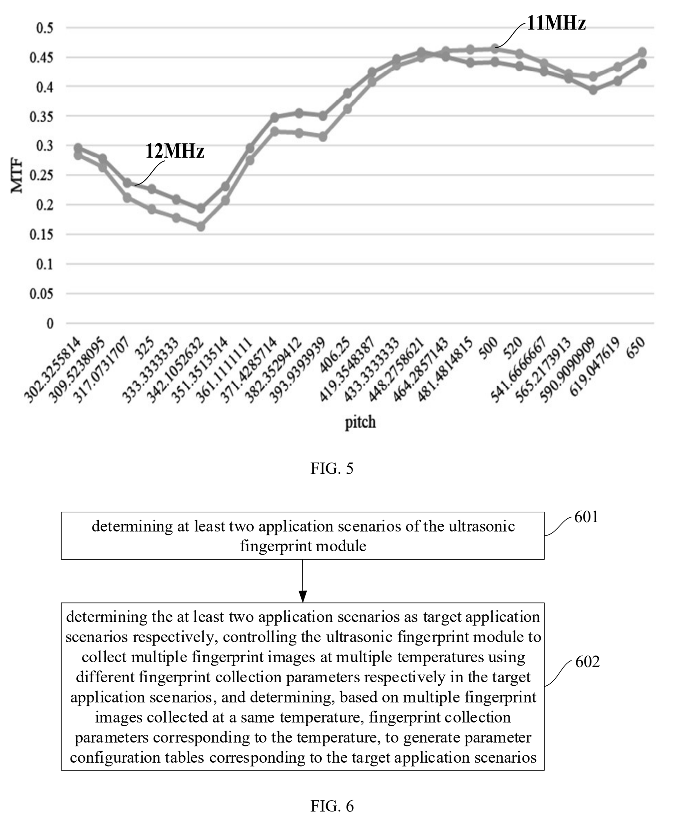

The multiple parameter configuration tables may correspond to multiple fingerprint spatial frequencies. Taking the ultrasonic emission frequency as an example, FIG. 5 is a schematic diagram showing a corresponding relationship between spatial frequency and ultrasonic emission frequency provided in an embodiment of the present disclosure. As shown in FIG. 5, a vertical axis in FIG. 5 is used to indicate a Modulation Transfer Function (MTF). The higher the MTF value, the better the reproducibility and transparency of the fingerprint module, and the better the image quality of the collected fingerprint images. A horizontal axis in FIG. 5 is used to indicate a pitch value, and the pitch value is inversely proportional to the spatial frequency, the lower the spatial frequency, the smaller the distance between adjacent stripes on the fingerprint, and the smaller the distance between two adjacent ridges on a finger's fingerprint, indicating that the finger has coarse fingerprints. The higher the spatial frequency, the larger the distance between adjacent stripes on the fingerprint, and the larger the distance between two adjacent ridges on a finger's fingerprint, indicating that the finger has fine fingerprints. As shown in FIG. 5, when the pitch value is greater than approximately 448.27, the MTF value of low-frequency ultrasonic signals is larger. Therefore, when the ultrasonic emission frequency is relatively lower, a fingerprint acquisition effect is better for low spatial frequency cases (i.e., fingers with coarse fingerprints). When the ultrasonic emission frequency is relatively higher, the fingerprint acquisition effect is better for high spatial frequency cases (i.e., fingers with fine fingerprints).

In this embodiment of the present disclosure, the multiple parameter configuration tables correspond to the different ranges of the fingerprint spatial frequencies. Therefore, when performing fingerprint recognition on fingers with coarse fingerprints or fingers with fine fingerprints, multiple fingerprint acquisition parameters in multiple parameter configuration tables may be searched for based on the ambient temperature, the fingerprint acquisition parameters which are searched for may be matched with the ranges of the fingerprint spatial frequencies, enabling the ultrasonic fingerprint module to collect high-image quality fingerprint images based on the fingerprint acquisition parameters, thereby improving the success rate of fingerprint recognition.

FIG. 6 is a flowchart of a method for generating a parameter configuration table provided in an embodiment of the present disclosure. As shown in FIG. 6, the method for generating a parameter configuration table includes steps 601-602 as follows:

Step 601: determining at least two application scenarios of the ultrasonic fingerprint module.

The application scenarios include the usage states of the electronic device where the ultrasonic fingerprint module is located or the fingerprint spatial frequencies. The usage states of the electronic device include at least: no film on the display screen, films of different materials and/or thicknesses on the display screen. For the specific usage states and spatial frequency, reference may be made to the description in the aforementioned embodiment, detailed description thereof will be omitted herein.

Step 602: determining the at least two application scenarios as target application scenarios respectively, controlling the ultrasonic fingerprint module to collect multiple fingerprint images at multiple temperatures using multiple fingerprint acquisition parameters respectively in the target application scenarios, and determining, based on multiple fingerprint images collected at a same temperature, fingerprint acquisition parameters corresponding to the temperature, to generate parameter configuration tables corresponding to the target application scenarios.

The parameter configuration tables corresponding to the target application scenarios include corresponding relationships between the multiple temperatures and the corresponding multiple fingerprint acquisition parameters in the target application scenarios. The parameter configuration table corresponding to each of the target application scenarios is generated to obtain the multiple parameter configuration tables.

It should be understood that the multiple temperatures may be set as needed. In particular, a temperature range may be determined based on a working environment of the fingerprint module. For example, the temperature range may be set to [-20°C, 60°C], starting with fingerprint image collection at -20°C, increasing by 5°C each time, until reaching 60°C.

In one example, the fingerprint acquisition parameters may include the ultrasonic emission frequency, the echo delay, and the number of integrations. Alternatively, the echo delay may be averaged across fingerprint acquisition parameters corresponding to the same temperature for multiple fingerprint modules, and the average values of echo delays corresponding to different temperatures may be fitted into an echo delay curve, and a corresponding relationship between the echo delay and the temperature may then be determined based on the fitted echo delay curve. The number of integrations may also be averaged across fingerprint acquisition parameters corresponding to the same temperature for multiple fingerprint modules, and the average values of the numbers of integrations corresponding to different temperatures may be fitted into a number of integration curve, and a corresponding relationship between the number of integrations and the temperature may then be determined based on the fitted number of integrations curve.

In one example, Tables 1-3 below show three parameter configuration tables.

**Table 1**

| | | | | | | | | | | | | | | | |
|---|---|---|---|---|---|---|---|---|---|---|---|---|---|---|---|
| temperature (°C) | -20 | -15 | -10 | -5 | 0 | 5 | 10 | 15 | 20 | 25 | 30 | 35 | 40 | 45 | 50 |
| frequency (MHz) | *f*₁ | *f*₁ | *f*₁ | *f*₂ | *f*₂ | *f*₂ | *f*₃ | *f*₃ | *f*₃ | *f*₃ | *f*₃ | *f*₄ | *f*₄ | *f*₅ | *f*₅ |
| echo delay | *k*₁ ** T*³ *- k*₂ ** T*² *+ k*₃ ** T + k*₄ | | | | | | | | | | | | | | |
| number of integrations | *z*₁ ** T*³ *- z*₂ ** T*² *+ z*₃ ** T + z*₄ | | | | | | | | | | | | | | |

**Table 2**

| | | | | | | | | | | | | | | | |
|---|---|---|---|---|---|---|---|---|---|---|---|---|---|---|---|
| temperature (°C) | -20 | -15 | -10 | -5 | 0 | 5 | 10 | 15 | 20 | 25 | 30 | 35 | 40 | 45 | 50 |
| frequency (MHz) | *f*₃ | *f*₃ | *f*₃ | *f*₃ | *f*₄ | *f*₄ | *f*₅ | *f*₅ | *f*₅ | *f*₆ | *f*₆ | *f*₆ | *f*₆ | *f*₇ | *f*₇ |
| echo delay | *k*₅ ** T*³ *- k*₆ ** T*² *+ k*₇ ** T + k*₈ | | | | | | | | | | | | | | |
| number of integrations | *z*₅ ** T*³ *- z*₆ ** T*² *+ z*₇ ** T + z*₈ | | | | | | | | | | | | | | |

**Table 3**

| | | | | | | | | | | | | | | | |
|---|---|---|---|---|---|---|---|---|---|---|---|---|---|---|---|
| temperature (°C) | -20 | -15 | -10 | -5 | 0 | 5 | 10 | 15 | 20 | 25 | 30 | 35 | 40 | 45 | 50 |
| frequency (MHz) | *f*₂ | *f*₂ | *f*₂ | *f*₃ | *f*₃ | *f*₃ | *f*₅ | *f*₅ | *f*₅ | *f*₅ | *f*₅ | *f*₇ | *f*₇ | *f*₇ | *f*₇ |
| echo delay | *k*₉ ** T*³ *- k*₁₀ ** T*² + *k*₁₁ ** T + k*₁₂ | | | | | | | | | | | | | | |
| number of integrations | *z*₉ ** T*³ *- z*₁₀ ** T*² *+ z*₁₁ ** T + z*₁₂ | | | | | | | | | | | | | | |

In Tables 1-3 above, T represents the ambient temperature, f₁ to f₇ represent different frequencies, k₁ to k₁₂ and z₁ to z₁₂ represent the fitted parameters. In one example, the frequency relationship in the above tables may be f₁ > f₂ > f₃ > f₄ > f₅ > f₇ > f₆. Table 1 may be used to represent the parameter configuration table corresponding to a film-free state, Table 2 may be used to represent the parameter configuration table corresponding to a factory-installed film (typically a soft film), and Table 3 may be used to represent the parameter configuration table corresponding to a tempered glass film. Different temperatures correspond to multiple fingerprint acquisition parameters in the different application scenarios. Since the ultrasonic emission frequency in Table 1 is higher, it performs better in film-free scenarios. The ultrasonic emission frequency in Table 2 is lower, it performs better in film-applied scenarios. The echo delay and the number of integrations in Table 3 are larger, thus performing better in scenarios involving tempered glass films, dirty fingers, or foreign objects.

In another example, the parameter configuration tables may be determined based on relationships between multiple temperatures and multiple fingerprint acquisition parameters, which are determined from fingerprint image collection results of a single fingerprint module, detailed description thereof will be omitted herein.

It should be noted that in a film-free scenario, a higher ultrasonic emission frequency may obtain better quality fingerprint images, while in a film-applied scenario, a lower ultrasonic emission frequency may obtain better quality fingerprint images. In a scenario with a low fingerprint spatial frequency (coarse fingerprints), a lower ultrasonic emission frequency may obtain better quality fingerprint images, while in a scenario with a high fingerprint spatial frequency (fine fingerprints), a higher ultrasonic emission frequency may obtain better quality fingerprint images. Therefore, the parameter configuration table corresponding to the film-free scenario is applicable to usage states involving both film-free and the high fingerprint spatial frequency, while the parameter configuration table corresponding to the film-applied scenario is applicable to usage states involving both film-applied and the low fingerprint spatial frequency. For example, Table 1 is applicable to fingerprint acquisition in fine fingerprints and film-free scenarios, and Table 3 is applicable to fingerprint acquisition in coarse fingerprints and film-applied scenarios.

It should be understood that the above tables are provided only as an example. Alternatively, different frequencies may correspond to different temperature ranges, for example: the same frequency may be used for temperatures ranging from 10°C to 30°C. This is because, first, within a certain temperature range, this frequency is the optimal frequency, and secondly, if there are too many frequencies, a large storage space would be required to store the parameter configuration tables. Due to memory limitations, multiple temperatures may share the same frequency in such cases.

In this embodiment of the present disclosure, in each application scenario, multiple fingerprint images are collected using multiple fingerprint acquisition parameters at different temperatures, therefore, the fingerprint acquisition parameters corresponding to the temperature may be determined based on the multiple fingerprint images, enabling the generation of the parameter configuration table corresponding to each application scenario to obtain the multiple parameter configuration tables. Since the fingerprint acquisition parameters corresponding to the temperature are determined based on the multiple fingerprint images, the optimal fingerprint acquisition parameters may be selected, so that when fingerprint acquisition is performed based on the fingerprint acquisition parameters in the parameter configuration table, the collected fingerprint images have good quality. In addition, multiple fingerprint acquisition parameters corresponding to different ambient temperatures in different scenarios may be determined based on the multiple parameter configuration tables for fingerprint acquisition. Compared to existing technologies that use fixed fingerprint acquisition parameters for fingerprint acquisition, since the fingerprint acquisition parameters vary depending on the ambient temperature and the fingerprint acquisition parameters corresponding to the current application scenario may be determined using multiple parameter configuration tables, the determined fingerprint acquisition parameters are more closely aligned with the current application scenario, enabling the ultrasonic fingerprint module to collect good quality fingerprint images during fingerprint acquisition using the fingerprint acquisition parameters suitable for the current application scenario, thereby improving the success rate of fingerprint recognition.

In a possible implementation, when determining, based on multiple fingerprint images collected at a same temperature, fingerprint acquisition parameters corresponding to the temperature, a signal-to-noise ratio and a signal quantity of the multiple fingerprint images collected at the same temperature may be determined respectively, weighted values corresponding to the multiple fingerprint images may be determined respectively, based on the signal-to-noise ratio and the signal quantity, a fingerprint image corresponding the largest weighted value may be determined as a target fingerprint image, and fingerprint acquisition parameters corresponding to the target fingerprint image may be determined as the fingerprint acquisition parameters corresponding to the temperature.

When determining the fingerprint acquisition parameters corresponding to each temperature, the signal quantity and signal-to-noise ratio of each fingerprint image of multiple fingerprints collected at the temperature may be determined. It should be understood that a higher signal-to-noise ratio indicates better quality of the fingerprint image, and a larger signal quantity indicates that the fingerprint image contains more fingerprint information. Therefore, it is necessary to select fingerprint images having high signal-to-noise ratio and large signal quantity. To this end, the signal quantity and signal-to-noise ratio of the fingerprint image is weighted to determine the weighted value of each fingerprint image, and the fingerprint acquisition parameters corresponding to the fingerprint image having the largest weighted value are determined as the fingerprint acquisition parameters corresponding to the temperature.

In one example, the signal-to-noise ratio and the signal quantity may be weighted according to a preset ratio. In another example, a variance of the signal-to-noise ratio and the signal quantity may be calculated first and then weighted, etc., which is not limited herein.

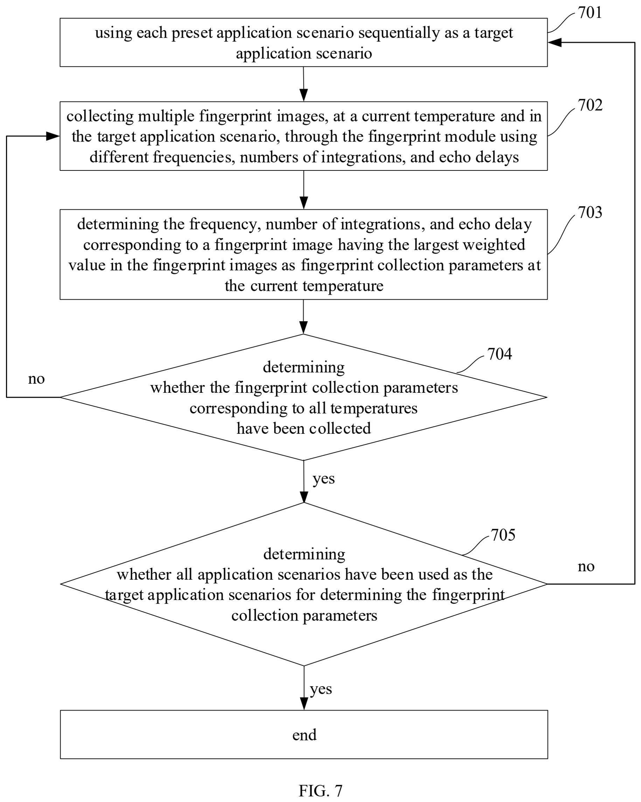

The following is an example for illustration. FIG. 7 is a flowchart of another method for generating a parameter configuration table provided in an embodiment of the present disclosure. As shown in FIG. 7, when generating a parameter configuration table, the following steps may be performed:
Step 701: using each preset application scenario sequentially as a target application scenario.
Step 702: collecting multiple fingerprint images, at a current temperature and in the target application scenario, through the fingerprint module using different frequencies, the numbers of integrations, and echo delays.
Step 703: determining the frequency, the number of integrations, and echo delay corresponding to a fingerprint image having the largest weighted value in the fingerprint images as fingerprint acquisition parameters at the current temperature.
Step 704: determining whether the fingerprint acquisition parameters corresponding to all temperatures have been collected, if yes, performing step 705; otherwise, determining a next temperature as the current temperature and performing step 702.
Step 705: determining whether all application scenarios have been used as the target application scenarios for determining the fingerprint acquisition parameters, if yes, ending the flow; otherwise, using a next application scenario that has not been used as the target application scenario as the target application scenario and performing step 701.

In this embodiment of the present disclosure, the signal-to-noise ratio and the signal quantity of multiple fingerprint images collected at the same temperature are determined respectively. Based on the signal-to-noise ratio and the signal quantity, the weighted values corresponding to the multiple fingerprint images are determined respectively. Therefore, the fingerprint acquisition parameters corresponding to the fingerprint image having the largest weighted value may be determined as the fingerprint acquisition parameters corresponding to the temperature. Thus, the optimal fingerprint acquisition parameters at the temperature may be selected. When fingerprint acquisition is performed based on these fingerprint acquisition parameters, the comprehensive quality of the collected fingerprint images is highest, which may improve the success rate of fingerprint recognition.

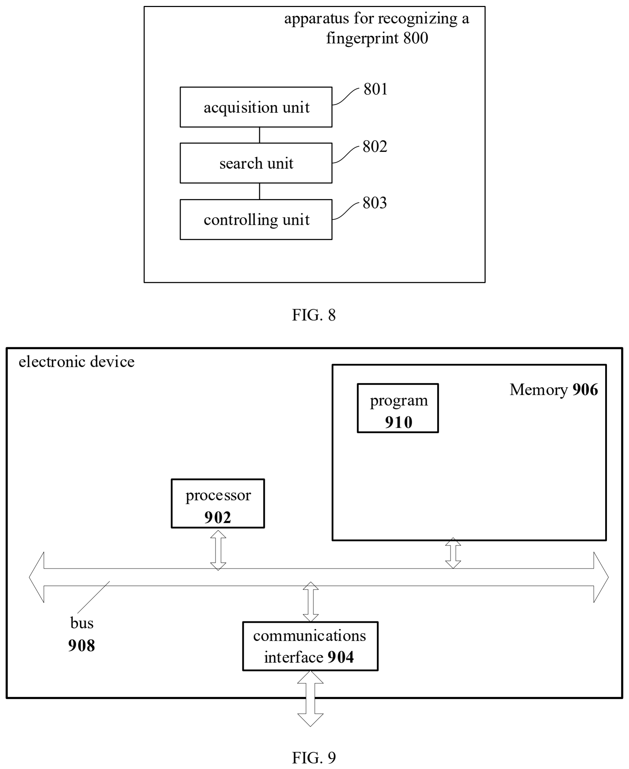

FIG. 8 is a schematic diagram of an apparatus for recognizing a fingerprint provided in an embodiment of the present disclosure. As shown in FIG. 8, the apparatus 800 includes:
an acquisition unit 801, configured to acquire an ambient temperature of an ultrasonic fingerprint module;
a search unit 802, configured to search for fingerprint acquisition parameters corresponding to the ambient temperature from multiple parameter configuration tables, where the fingerprint acquisition parameters corresponding to the ambient temperature differ in the multiple parameter configuration tables, and the fingerprint acquisition parameters constitute at least part of parameters required to perform fingerprint acquisition by the ultrasonic fingerprint module; and
a controlling unit 803, configured to control the ultrasonic fingerprint module to perform fingerprint acquisition based on the fingerprint acquisition parameters, so as to perform fingerprint recognition using collected fingerprint images.

In this embodiment of the present disclosure, the acquisition unit 801 may be used to perform step 101 in the above method embodiment, the search unit 802 may be used to perform step 102 in the above method embodiment, and the controlling unit 803 may be used to perform step 103 in the above method embodiment.

In a possible implementation, the search unit 802 may be further configured to: search for the fingerprint acquisition parameters corresponding to the ambient temperature sequentially from the multiple parameter configuration tables according to a search order of the multiple parameter configuration tables, and perform fingerprint acquisition based on the fingerprint acquisition parameters, until the fingerprint is successfully recognized using the collected fingerprint images.

In a possible implementation, the search unit 802 may be further configured to: if fingerprint acquisition is performed based on fingerprint acquisition parameters in a first to-be-searched parameter configuration table and the fingerprint is not successfully recognized using the collected fingerprint images, search for the fingerprint acquisition parameters corresponding to the ambient temperature from the multiple parameter configuration tables respectively, and control the ultrasonic fingerprint module to perform fingerprint acquisition respectively based on each of the fingerprint acquisition parameters that is searched for; and determine a target fingerprint image having an optimal image quality from the collected fingerprint images, and perform fingerprint recognition based on the target fingerprint image.

In a possible implementation, the search unit 802 may be further configured to: after controlling the ultrasonic fingerprint module to perform fingerprint acquisition based on the fingerprint acquisition parameters and successfully recognizing the fingerprint using the collected fingerprint images, if a parameter configuration table containing the fingerprint acquisition parameters is not the first to-be-searched parameter configuration table, update the search order of the multiple parameter configuration tables, so that the parameter configuration table containing the fingerprint acquisition parameters used to collect the fingerprint images is to be searched first in a next round of fingerprint recognition.

In a possible implementation, the search unit 802 may be further configured to: search a current parameter configuration table in the multiple parameter configuration tables based on the ambient temperature; when the current parameter configuration table includes the ambient temperature, read the fingerprint acquisition parameters corresponding to the ambient temperature from the current parameter configuration table; when the current parameter configuration table does not include the ambient temperature, determine a reference temperature that is closest to the ambient temperature and included in the current parameter configuration table, and determine fingerprint acquisition parameters corresponding to the reference temperature in the current parameter configuration table as the fingerprint acquisition parameters corresponding to the ambient temperature.

In a possible implementation, the fingerprint acquisition parameters include at least one of: an ultrasonic emission frequency, an echo delay, and the number of integrations, where the echo delay is used to indicate a time difference between emission of an ultrasonic signal and reception of an ultrasonic echo signal reflected back by an external structure, and the number of integrations is used to indicate the number of integration operations performed on the ultrasonic echo signal or the number of ultrasonic emissions.

In a possible implementation, the multiple parameter configuration tables correspond to different usage states of an electronic device where the ultrasonic fingerprint module is located, the ultrasonic fingerprint module is located below a display screen of the electronic device, and the usage states of the electronic device include at least: no film on the display screen, films of different materials and/or thicknesses on the display screen; the fingerprint acquisition parameters include at least one of: an ultrasonic emission frequency, an echo delay, and the number of integrations; when the ambient temperature is the same, the ultrasonic emission frequency of the electronic device in the usage state when there is no film on the display screen is greater than the ultrasonic emission frequency of the electronic device in the usage state when there is a film on the display screen; when the ambient temperature is the same, the echo delay and the number of integrations of the electronic device in the usage state when there is a film on the display screen are greater than the echo delay and the number of integrations of the electronic device in the usage state when there is no film on the display screen; and when the ambient temperature is the same, the echo delay and the number of integrations of the electronic device in the usage state when the display screen is applied with a tempered glass film are greater than the echo delay and the number of integrations of the electronic device in the usage state when the display screen is applied with a non-tempered glass film.

In a possible implementation, the multiple parameter configuration tables correspond to different ranges of fingerprint spatial frequencies, where each of the fingerprint spatial frequencies is used to indicate a distance between adjacent stripes on the fingerprint; the fingerprint acquisition parameters include at least one of: an ultrasonic emission frequency, an echo delay, and the number of integrations; and when the ambient temperature is the same, the higher each of the fingerprint spatial frequencies, the higher the ultrasonic emission frequency.

In a possible implementation, the multiple parameter configuration tables are obtained by using a method as follows: determining at least two application scenarios of the ultrasonic fingerprint module, where the application scenarios include the usage states of the electronic device where the ultrasonic fingerprint module is located or the fingerprint spatial frequencies; and determining the at least two application scenarios as target application scenarios respectively, controlling the ultrasonic fingerprint module to collect multiple fingerprint images at multiple temperatures using multiple fingerprint acquisition parameters respectively in the target application scenarios, and determining, based on multiple fingerprint images collected at a same temperature, fingerprint acquisition parameters corresponding to the temperature, to generate parameter configuration tables corresponding to the target application scenarios, where the parameter configuration tables corresponding to the target application scenarios include corresponding relationships between the multiple temperatures and the corresponding multiple fingerprint acquisition parameters in the target application scenarios.

In a possible implementation, the determining, based on multiple fingerprint images collected at a same temperature, fingerprint acquisition parameters corresponding to the temperature, includes: determining a signal-to-noise ratio and a signal quantity of the multiple fingerprint images collected at the same temperature respectively; determining weighted values corresponding to the multiple fingerprint images respectively, based on the signal-to-noise ratio and the signal quantity; and determining a fingerprint image corresponding to the largest weighted value as a target fingerprint image, and determining fingerprint acquisition parameters corresponding to the target fingerprint image as the fingerprint acquisition parameters corresponding to the temperature.

Referring to FIG. 9, illustrating a structural schematic diagram of an electronic device according to an embodiment of the present disclosure. Specific embodiments of the present disclosure do not limit the specific implementation of the electronic device.

As shown in FIG. 9, the electronic device may include: a processor 902, a communications interface 904, a memory 906, and a communications bus 908.

In which:
The processor 902, the communications interface 904, and the memory 906 communicate with each other via the communications bus 908.

The communications interface 904 is configured to communicate with other electronic devices or servers.

The processor 902 is configured to execute a program 910, which may specifically execute relevant steps in the above fingerprint recognition method embodiments.

Specifically, the program 910 may include a program code, which includes a computer operation instruction.

The processor 902 may be a Central Processing Unit (CPU), or a Graphics Processing Unit (GPU), or an Application Specific Integrated Circuit (ASIC), or one or more integrated circuits configured to implement embodiments of the present disclosure. One or more processors included in a smart device may be processors of the same type, such as one or more CPUs, one or more GPUs; or different types of processors, such as one or more CPUs, one or more GPUs, and one or more ASICs.

The memory 906 is configured to store the program 910. The memory 906 may include a high-speed RAM memory, and may also include a non-volatile memory, such as at least one disk memory.

The program 910 may be specifically used to enable the processor 902 to perform the method for recognizing a fingerprint in any one of the aforementioned embodiments.

The specific implementation of each step in the program 910 may refer to the corresponding description of the corresponding step and unit in any one of the aforementioned fingerprint recognition method embodiments, detailed description thereof will be omitted herein. Those skilled in the art may clearly understand that for the convenience and simplicity of description, the specific working process of the above-described devices and modules may refer to the corresponding process description in the aforementioned method embodiments, detailed description thereof will be omitted herein.

In this embodiment of the present disclosure, after collecting the ambient temperature of the ultrasonic fingerprint module, the fingerprint acquisition parameters corresponding to the ambient temperature may be searched from the parameter configuration tables, and the ultrasonic fingerprint module may be controlled to perform fingerprint acquisition based on the fingerprint acquisition parameters, then fingerprint recognition may be performed based on the collected fingerprint images. Since the fingerprint acquisition parameters corresponding to the same ambient temperature differ in the multiple parameter configuration tables, fingerprint acquisition may be performed using the multiple fingerprint acquisition parameters based on the ambient temperature and the usage states of the electronic device, and fingerprint recognition may be attempted based on the collected fingerprint images. Compared to existing technologies that use fixed fingerprint acquisition parameters for fingerprint acquisition, this solution offers more options for the fingerprint acquisition parameters, thereby improving the success rate of fingerprint recognition.

An embodiment of the present disclosure also provides a computer program product, including computer instructions, the computer instructions instruct a computing device to perform operations corresponding to any one of the methods described in the above method embodiments.

It should be noted that depending on the needs of implementation, the various components/steps described in the embodiments of the present disclosure may be divided into more components/steps, or two or more components/steps, or parts of the components/steps, may be combined into new components/steps to achieve the objectives of the embodiments of the present disclosure.

The above method according to embodiments of the present disclosure may be implemented in hardware, firmware, or implemented as software or computer code that can be stored in a recording medium (such as a CD ROM, RAM, floppy disk, hard disk or magnetooptical disk), or implemented as a computer code originally stored in a remote recording medium or a non-temporary machine-readable medium downloaded through a network and to be stored in a local recording medium, so that the method described herein may be processed by such software stored on a recording medium using a general-purpose computer, a dedicated processor or programmable or dedicated hardware (such as an ASIC or FPGA). It may be understood that a computer, a processor, a microprocessor controller or programmable hardware includes a storage component (e.g., RAM, ROM, flash memory, etc.) that can store or receive software or computer code, and when the software or computer code is accessed and executed by the computer, the processor or hardware, the method for recognizing a fingerprint described herein is implemented. In addition, when the general-purpose computer accesses the code for implementing the method for recognizing a fingerprint shown herein, the execution of the code converts the general-purpose computer into a dedicated computer for performing the method for recognizing a fingerprint shown herein.

Those skilled in the art may recognize that the units and method steps described in the examples disclosed herein in the embodiments can be implemented using electronic hardware, or a combination of computer software and electronic hardware. Whether these functions are executed in hardware or software depends on the specific application and design constraints of the technical solution. Those skilled in the art may use different methods to implement the described functions for each specific application, but such implementation should not be considered to fall outside the scope of the embodiments of the present disclosure.

The above embodiments are provided for illustrative purposes only and are not intended to limit the scope of the present disclosure. Those skilled in the art may make various changes and modifications without departing from the spirit and scope of the embodiments of the present disclosure. Therefore, all equivalent technical solutions also fall within the scope of the embodiments of the present disclosure, and the scope of patent protection of the embodiments of the present disclosure should be defined by the claims.

## Claims

1. A method for recognizing a fingerprint, comprising:
acquiring an ambient temperature of an ultrasonic fingerprint module;
searching for fingerprint acquisition parameters corresponding to the ambient temperature from multiple parameter configuration tables, wherein the fingerprint acquisition parameters corresponding to the ambient temperature differ among the multiple parameter configuration tables, and the fingerprint acquisition parameters constitute at least part of parameters required to acquire fingerprint by the ultrasonic fingerprint module; and
controlling the ultrasonic fingerprint module to acquire a fingerprint image based on the fingerprint acquisition parameters, so as to perform fingerprint recognition using the acquired fingerprint image.

2. The method according to claim 1, wherein the searching for fingerprint acquisition parameters corresponding to the ambient temperature from multiple parameter configuration tables, comprises:
searching for the fingerprint acquisition parameters corresponding to the ambient temperature sequentially from the multiple parameter configuration tables according to a search order of the multiple parameter configuration tables, and performing fingerprint acquisition based on the fingerprint acquisition parameters, until the fingerprint is successfully recognized using the acquired fingerprint image.

3. The method according to claim 1, wherein the method comprises:
if fingerprint acquisition is performed based on fingerprint acquisition parameters in a first to-be-searched parameter configuration table and the fingerprint is not successfully recognized using the acquired fingerprint image, searching for the fingerprint acquisition parameters corresponding to the ambient temperature from the multiple parameter configuration tables respectively, and controlling the ultrasonic fingerprint module to perform fingerprint acquisition respectively based on each of the fingerprint acquisition parameters that is searched for; and
determining a target fingerprint image having an optimal image quality from the acquired fingerprint image, and performing fingerprint recognition based on the target fingerprint image.

4. The method according to claim 2 or 3, wherein the method further comprises:
after controlling the ultrasonic fingerprint module to perform fingerprint acquisition based on the fingerprint acquisition parameters which are searched for and successfully recognizing the fingerprint using the acquired fingerprint image, if a parameter configuration table containing the fingerprint acquisition parameters which are searched for is not the first to-be-searched parameter configuration table, updating the search order of the multiple parameter configuration tables, so that the parameter configuration table containing the fingerprint acquisition parameters which are searched for and used to collect the fingerprint images is to be searched first in a next round of fingerprint recognition.

5. The method according to claim 1, wherein searching for the fingerprint acquisition parameters corresponding to the ambient temperature from the multiple parameter configuration tables, comprises:
searching for a current parameter configuration table in the multiple parameter configuration tables based on the ambient temperature;
when the current parameter configuration table comprises the ambient temperature, reading fingerprint acquisition parameters corresponding to the ambient temperature from the current parameter configuration table; and
when the current parameter configuration table does not comprise the ambient temperature, determining a reference temperature that is closest to the ambient temperature and comprised in the current parameter configuration table, and determining fingerprint acquisition parameters corresponding to the reference temperature in the current parameter configuration table as the fingerprint acquisition parameters corresponding to the ambient temperature.

6. The method according to claim 1, wherein the fingerprint acquisition parameters comprise at least one of: an ultrasonic emission frequency, an echo delay, and a number of integrations, wherein the echo delay is used to indicate a time difference between emission of an ultrasonic signal and reception of an ultrasonic echo signal reflected by an external structure, and the number of integrations is used to indicate a number of integration operations performed on the ultrasonic echo signal or a number of ultrasonic emissions.

7. The method according to claim 1, wherein the multiple parameter configuration tables correspond to different usage states of an electronic device where the ultrasonic fingerprint module is located, the ultrasonic fingerprint module is disposed below a display screen of the electronic device, and the usage states of the electronic device comprise at least: no film applied on the display screen, films of different materials and/or thicknesses applied on the display screen; the fingerprint acquisition parameters comprise at least one of: an ultrasonic emission frequency, an echo delay, and a number of integrations;
when the ambient temperature is the same, the ultrasonic emission frequency when the electronic device is in a usage state of the display screen without a film is greater than the ultrasonic emission frequency when the electronic device is in a usage state of the display screen with a film;
when the ambient temperature is the same, the echo delay and the number of integrations when the electronic device in the usage state of the display screen with the film are greater than the echo delay and the number of integrations when the electronic device is in the usage state of the display screen with the film; and
when the ambient temperature is the same, the echo delay and the number of integrations when the electronic device is in a usage state of the display screen with a tempered glass film are greater than the echo delay and the number of integrations when the electronic device is in a usage state of the display screen with a non-tempered glass film.

8. The method according to claim 1, wherein the multiple parameter configuration tables correspond to different ranges of fingerprint spatial frequencies, wherein each of the fingerprint spatial frequencies is used to indicate a distance between adjacent stripes on the fingerprint; the fingerprint acquisition parameters comprise at least one of: an ultrasonic emission frequency, an echo delay, and number of integrations; and
when the ambient temperature is the same, the higher each of the fingerprint spatial frequencies, the higher the ultrasonic emission frequency.

9. The method according to claim 7 or 8, wherein the multiple parameter configuration tables are obtained by using a method as follows:
determining at least two application scenarios of the ultrasonic fingerprint module, wherein the application scenarios comprise the usage states of the electronic device where the ultrasonic fingerprint module is located or the fingerprint spatial frequencies; and
determining the at least two application scenarios as target application scenarios respectively, controlling the ultrasonic fingerprint module to collect multiple fingerprint images at multiple temperatures using multiple fingerprint acquisition parameters respectively in the target application scenarios, and determining, based on multiple fingerprint images collected at a same temperature, fingerprint acquisition parameters corresponding to the temperature, to generate parameter configuration tables corresponding to the target application scenarios; wherein the parameter configuration tables corresponding to the target application scenarios comprise relationships between the multiple temperatures and the corresponding multiple fingerprint acquisition parameters in the target application scenarios.

10. The method according to claim 9, wherein the determining, based on multiple fingerprint images collected at a same temperature, fingerprint acquisition parameters corresponding to the temperature, comprises:
determining a signal-to-noise ratio and a signal quantity of the multiple fingerprint images collected at the same temperature respectively;
determining weighted values corresponding to the multiple fingerprint images respectively, based on the signal-to-noise ratio and the signal quantity; and
determining a fingerprint image corresponding to the largest weighted value as a target fingerprint image, and determining fingerprint acquisition parameters corresponding to the target fingerprint image as the fingerprint acquisition parameters corresponding to the temperature.

11. An apparatus for recognizing a fingerprint, comprising:
an acquisition unit, configured to acquire an ambient temperature of an ultrasonic fingerprint module;
a search unit, configured to search for fingerprint acquisition parameters corresponding to the ambient temperature from multiple parameter configuration tables, wherein the fingerprint acquisition parameters corresponding to the ambient temperature differ in the multiple parameter configuration tables, and the fingerprint acquisition parameters constitute at least part of parameters required to perform fingerprint acquisition by the ultrasonic fingerprint module; and
a controlling unit, configured to control the ultrasonic fingerprint module to perform fingerprint acquisition based on the fingerprint acquisition parameters, so as to perform fingerprint recognition using collected fingerprint images.

12. The apparatus according to claim 11, wherein the search unit is configured to:
search for the fingerprint acquisition parameters corresponding to the ambient temperature sequentially from the multiple parameter configuration tables according to a search order of the multiple parameter configuration tables, and perform fingerprint acquisition based on the fingerprint acquisition parameters, until the fingerprint is successfully recognized using the collected fingerprint images.

13. The apparatus according to claim 11, wherein the search unit is configured to:
if fingerprint acquisition is performed based on fingerprint acquisition parameters in a first to-be-searched parameter configuration table and the fingerprint is not successfully recognized using the collected fingerprint images, search for the fingerprint acquisition parameters corresponding to the ambient temperature from the multiple parameter configuration tables respectively, and control the ultrasonic fingerprint module to perform fingerprint acquisition respectively based on each of the fingerprint acquisition parameters that is searched for; and determine a target fingerprint image having an optimal image quality from the collected fingerprint images, and perform fingerprint recognition based on the target fingerprint image.

14. The apparatus according to claim 12 or 13, wherein the controlling unit is configured to:
after controlling the ultrasonic fingerprint module to perform fingerprint acquisition based on the fingerprint acquisition parameters which are searched for and successfully recognizing the fingerprint using the collected fingerprint images, if a parameter configuration table containing the fingerprint acquisition parameters which are searched for is not the first to-be-searched parameter configuration table, update the search order of the multiple parameter configuration tables, so that the parameter configuration table containing the fingerprint acquisition parameters which are searched for and used to collect the fingerprint images is to be searched first in a next round of fingerprint recognition.

15. The apparatus according to claim 11, wherein the search unit is configured to:
search for a current parameter configuration table in the multiple parameter configuration tables based on the ambient temperature; when the current parameter configuration table comprises the ambient temperature, read fingerprint acquisition parameters corresponding to the ambient temperature from the current parameter configuration table; and when the current parameter configuration table does not comprise the ambient temperature, determine a reference temperature that is closest to the ambient temperature and comprised in the current parameter configuration table, and determine fingerprint acquisition parameters corresponding to the reference temperature in the current parameter configuration table as the fingerprint acquisition parameters corresponding to the ambient temperature.

16. The apparatus according to claim 11, wherein the multiple parameter configuration tables correspond to different usage states of an electronic device where the ultrasonic fingerprint module is located, the ultrasonic fingerprint module is located below a display screen of the electronic device, and the usage states of the electronic device comprise at least: no film on the display screen, films of different materials and/or thicknesses on the display screen; the fingerprint acquisition parameters comprise at least one of: an ultrasonic emission frequency, an echo delay, and a number of integrations; when the ambient temperature is the same, the ultrasonic emission frequency of the electronic device in a usage state when there is no film on the display screen is greater than the ultrasonic emission frequency of the electronic device in a usage state when there is a film on the display screen; when the ambient temperature is the same, the echo delay and the number of integrations of the electronic device in the usage state when there is a film on the display screen are greater than the echo delay and the number of integrations of the electronic device in the usage state when there is no film on the display screen; and when the ambient temperature is the same, the echo delay and the number of integrations of the electronic device in a usage state when the display screen is applied with a tempered glass film are greater than the echo delay and the number of integrations of the electronic device in a usage state when the display screen is applied with a non-tempered glass film.

17. The apparatus according to claim 11, wherein the multiple parameter configuration tables correspond to different ranges of fingerprint spatial frequencies, wherein each of the fingerprint spatial frequencies is used to indicate a distance between adjacent stripes on the fingerprint; the fingerprint acquisition parameters comprise at least one of: an ultrasonic emission frequency, an echo delay, and a number of integrations; and when the ambient temperature is the same, the higher each of the fingerprint spatial frequencies, the higher the ultrasonic emission frequency.

18. The apparatus according to claim 16 or 17, wherein the multiple parameter configuration tables are obtained by using a method as follows:
determining at least two application scenarios of the ultrasonic fingerprint module, wherein the application scenarios comprise the usage states of the electronic device where the ultrasonic fingerprint module is located or the fingerprint spatial frequencies; and
determining the at least two application scenarios as target application scenarios respectively, controlling the ultrasonic fingerprint module to collect multiple fingerprint images at multiple temperatures using multiple fingerprint acquisition parameters respectively in the target application scenarios, and determining, based on multiple fingerprint images collected at a same temperature, fingerprint acquisition parameters corresponding to the temperature, to generate parameter configuration tables corresponding to the target application scenarios; wherein the parameter configuration tables corresponding to the target application scenarios comprise relationships between the multiple temperatures and the corresponding multiple fingerprint acquisition parameters in the target application scenarios.

19. An electronic device, comprising: a processor, a memory, a communication interface and a communication bus, wherein the processor, the memory and the communication interface communicate with each other via the communication bus;
the memory is configured to store at least one executable instruction, the executable instruction enables the processor to perform the method for recognizing a fingerprint according to any one of claims 1-10.

20. A computer storage medium, storing a computer program thereon, the program, when executed by a processor, implements the method for recognizing a fingerprint according to any one of claims 1-10.
